Europäisches Patentamt

European Patent Office

Office européen des brevets

(11) Veröffentlichungsnummer: **0 047 417**
A1

(12) **EUROPÄISCHE PATENTANMELDUNG**

(21) Anmeldenummer: **81106514.3**

(22) Anmeldetag: **21.08.81**

(51) Int. Cl.³: **A 01 D 53/08,** F 02 N 3/02,
A 01 D 69/00

(30) Priorität: **04.09.80 DE 8023614 U**

(71) Anmelder: **Wolf-Geräte GmbH, Gregor-Wolf-Strasse
Postfach 860 und 880, D-5240 Betzdorf/Sieg (DE)**

(43) Veröffentlichungstag der Anmeldung: **17.03.82
Patentblatt 82/11**

(72) Erfinder: **Kolb, Walter, Ing., Martin-Luther-Strasse 51,
D-5240 Betzdorf/Sieg (DE)**

(74) Vertreter: **Wallach, Curt, Dipl.-Ing. Patentanwälte
Dipl.-Ing. C.Wallach et ai, Dipl.-Ing. G. Koch
Dr.T.Haibach Dipl.-Ing. R. Feldkamp Kaufingerstrasse 8,
D-8000 München 2 (DE)**

(84) Benannte Vertragsstaaten: **AT BE CH IT LI NL SE**

(54) Durch eine Verbrennungskraftmaschine angetriebener Rasenmäher.

(57) Bei einem Rasenmäher mit Antrieb durch eine Verbrennungskraftmaschine wird diese durch Ziehen eines am Ende eines Starterseils ansetzenden Startergriffs angeworfen. Das Startseil (4) wird von einer Führung (2) getragen, die am Griffgestänge (3) des Mähers so angeordnet ist, daß der Griff (1) in Bedienungsstellung des Mähers erfaßbar ist.

- 1 -

## Durch eine Verbrennungskraftmaschine angetriebener Rasenmäher.

Die Erfindung betrifft einen Rasenmäher der im Oberbegriff des Patentanspruchs 1 angegebenen Gattung. Bei derartigen über einen Schiebegriff geführten Rasenmähern, die nicht über einen elektrischen Anlassermotor angelassen werden können, muß sich die Bedienungsperson beim Herausziehen des Starterseils in unmittelbarer Nähe des Motors aufhalten, was eine Gefahrenquelle in sich birgt, weil bei der Anlaßbetätigung durch das Ziehen des Kabels der Mäher bei ungeschickter Handhabung angehoben oder sogar umgekippt werden kann, so daß die von dem möglicherweise schon angelassenen Motor angetriebenen Messer frei umlaufen und Verletzungen hervorrufen können. Dies gilt sowohl für Rasenmäher, bei denen das Anziehen des Starterseilzugs senkrecht nach oben erfolgt (sogenannte Senkrechtstarter) als auch bei jenen Rasenmähern, bei denen das Seil in Horizontalrichtung herausgezogen werden muß (Horizontalstarter). In beiden Fällen muß die Bedienungsperson während des Startvorganges direkt neben dem Rasenmäher stehen, wobei sich die Füße in unmittelbarer Nähe des rotierenden Messers befinden, weil im allgemeinen nicht nur am Starterseil gezogen, sondern durch die Bedienungsperson auch eine Abstützkraft mit der anderen Hand oder mti einem Fuß ausgeübt werden muß. Da der Motor im allgemeinen ziemlich tief im Chassis eingebaut ist, erfordert die Betätigung des Seilzuges auch eine unbequeme Körperstellung, weil sich die Bedienungsperson hierzu bücken muß und dadurch eine unsichere Standstellung erhält, die die Unfallgefahr vergrößert.

Der Erfindung liegt die Aufgabe zugrunde, einen Rasenmäher der eingangs genannten Gattung dadurch zu verbessern, daß der Starterzug bequemer und unter Ausschaltung jeder Verletzungsgefahr einfach bedient werden kann.

Gelöst wird die gestellte Aufgabe durch die im Kennzeichnungsteil des Patentanspruchs 1 angegebenen Merkmale.

Durch die Erfindung wird erreicht, daß die Bedienungsperson beim Anlassen des Motors hinter dem Führungsgriff, d.h. in Bereitschaftsstellung zum Mähen stehen kann, und zwar in bequemer Standstellung, in der eine bequeme Abstützung über den Bedienungsgriff erfolgen kann. Durch das Ziehen, welches längs des Griffholmes erfolgt, ergibt sich eine ergonometrisch günstige Handhabung, was insbesondere im Falle der Notwendigkeit mehrerer aufeinanderfolgender Startvorgänge von Vorteil ist. Die sonst gefährdeten Füße der Bedienungsperson sind beim Anlaßvorgang weit von den sich drehenden Messern entfernt und daher gegen Verletzungen sicher geschützt.

Die Erfindung hat weiter den Vorteil, daß die Bedienungsperson während des Startvorganges bzw. nach dem Starten den Gashebel,der meist am Bedienungsgriff angeordnet ist, leicht mit der anderen Hand oder sogar mit der den Starterzug betätigenden Hand bedienen kann, nachdem der Startergriff losgelassen ist.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen

Figur 1 eine perspektivische Ansicht eines erfindungsgemäß ausgebildeten Rasenmähers und

Figur 2 in größere m Maße eine Teilansicht der Seilzugführung und des Startergriffs.

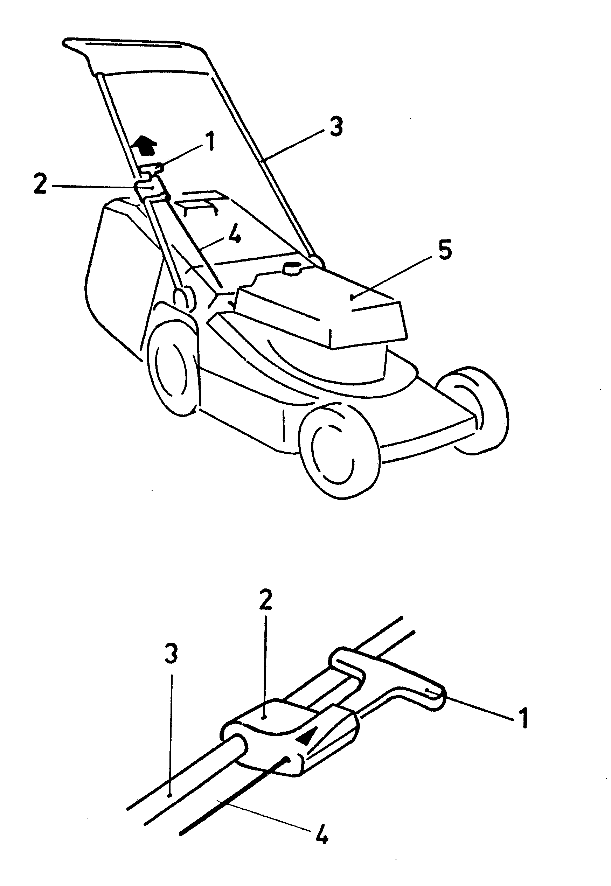

Gemäß dem dargestellten Ausführungsbeispiel ist der Startergriff 1 mittels einer Führung 2 für das Starterseil 4 an einem Griffholm 3 derart befestigt, daß der Startgriff 1 im wesentlichen parallel zum Griffholm angezogen werden kann, was eine günstige Abstützung ergibt. Das Starterseil 4 ist gegebenenfalls über geeignete Umlenkvorrichtungen nach der Verbrennungskraftmaschine 5 geführt.

Für die Erfindung können Verbrennungskraftmaschinen herkömmlicher Bauart Anwendung finden, bei denen das Starterseil vertikal oder horizontal aus dem Motorgehäuse austritt. Zur Verminderung der Reibung kann dann das Starterseil über geeignete Umlenkvorrichtungen so nach der Führung 2 geleitet werden, daß es bereits im wesentlichen parallel zum Führungsholm 3 verläuft. Hierdurch wird es möglich, die erfindungsgemäße Führungsanordnung auch bereits an bestehende Rasenmäher anzubauen, indem an das Ende des innerhalb des Motorgehäuses aufgewickelten Starterseils ein Verlängerungsstück über eine am Chassis oder dergleichen festzuklemmende Umlenkvorrichtung nach einer Führung 2 geleitet wird, die bedienungsgünstig am Führungsholm oder gegebenenfalls am Führungsgriff befestigt werden kann.

Wenn die erfindungsgemäße Anordnung von Anfang an in den Rasenmäher eingebaut wird, dann empfiehlt es sich die Starterseilaustrittsöffnung des Motorgehäuses so anzuordnen, daß eine möglichst unmittelbare reibungsarme Führung nach dem Holm und dem dort durch die Führung festgelegten Startergriff gewährleistet ist.

Patentansprüche

1. Rasenmäher mit Antrieb durch eine Verbrennungskraftmaschine, die durch Ziehen eines am Ende eines Starterseils ansetzenden Startergriffs angeworfen wird, dadurch gekennzeichnet, daß am Griffgestänge (3) des Mähers eine Starterseilführung (2) angeordnet ist, benachbart zu der der Startergriff (1) in Ruhestellung derart angeordnet ist, daß er in Bedienungsstellung des Rasenmähers faßbar ist.

2. Rasenmäher nach Patentanspruch 1, dadurch gekennzeichnet, daß die Führung (2) an einem der vom Chassis nach dem Führungsgriff führenden Griffholme (3) derart angeordnet ist, daß das Starterseil (4) im wesentlichen parallel zu diesem Griffholm verlaufend anziehbar ist.

3. Rasenmäher nach den Patentansprüchen 1 und 2, dadurch gekennzeichnet, daß die den Startergriff (1) halternde Führung (2) im Bedienungsbereich des Rasenmähers befindlich ist.

4. Rasenmäher nach Patentanspruch 1, dadurch gekennzeichnet, daß zwischen der Austrittsöffnung des Starterseils aus dem Motor und der Führung (2) reibungsarme Umlenkvorrichtungen vorgesehen sind.

5. Rasenmäher nach Patentanspruch 4, dadurch gekennzeichnet, daß die Umlenkvorrichtungen als Gleitführung oder als Rollenführung ausgebildet sind.

- 6 -

6. Rasenmäher nach einem der Patentansprüche 1 bis 5, dadurch gekennzeichnet, daß die Gleitführung (2) am Griffgestänge des Mähers nachträglich mit einer Starterseilverlängerung festlegbar ist.

7. Rasenmäher nach Patentanspruch 4 und 6, dadurch gekennzeichnet, daß die Umlenkvorrichtung nachträglich am Mäher anbaubar ist.

0047417

Europäisches
Patentamt

**EUROPÄISCHER RECHERCHENBERICHT**

0047417

Nummer der Anmeldung

EP 81 10 6514

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 912 966 (MITCHELL)<br><br>* Insgesamt *<br><br>---- | 1-7 |

**KLASSIFIKATION DER ANMELDUNG (Int. Cl.³)**

A 01 D 53/08
F 02 N 3/02
A 01 D 69/00

**RECHERCHIERTE SACHGEBIETE (Int. Cl.³)**

A 01 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-11-1981 | DE LAMEILLEURE |

EPA form 1503.1  06.78